# EUROPEAN PATENT APPLICATION

(11) **EP 0 944 252 A1**
(43) Date of publication of application: **22.09.1999**
(21) Application number: 99302028.8
(22) Date of filing: 16.03.1999
(51) Int. Cl.: H04N 5/445

(54) **Information processing apparatus and method, digital signal demodulation apparatus and method, and providing medium**

(30) Priority: 17.03.1998 JP 6681398
(71) Applicant: SONY CORPORATION, Tokyo 141 (JP)
(72) Inventor: Okura, Yukiko, Shinagawa-ku, Tokyo (JP); Hanai, Tomoyuki, Shinagawa-ku, Tokyo (JP); Nashida, Tatsushi, Shinagawa-ku, Tokyo (JP); Okumura, Kazumasa, Shinagawa-ku, Tokyo (JP); Kohno, Tetsuya, Shinagawa-ku, Tokyo (JP); Nishina, Yasutomo, Shinagawa-ku, Tokyo (JP)
(74) Representative: Smith, Samuel Leonard

(57) **Abstract**

An EPG that is long in the vertical direction is displayed in a left-side area of the screen and a reduced picture is displayed in a top-right area. The reduced picture is a program picture that has been reduced in such a manner that its aspect ratio is kept equal to the aspect ratio of the screen of a monitor (horizontal/vertical; 16:9), and the entire program picture is displayed without being cut out. As a result, a user can refer to an EPG while watching a picture of a program.- Program text information of a program in the EPG indicated by a pointer is displayed in a display area 103 that is under the program picture. Further, channel text information of the selected channel is displayed in a display area 104 under the display area 103.

## Description

The present invention relates to an information processing apparatus and method, a digital signal demodulation apparatus and method, and a providing medium. In particular, the invention relates to an information processing-apparatus and method, a digital signal demodulation apparatus and method, and a providing medium in which an EPG that does not cause a viewer to have any difficulty watching a program can be displayed on a monitor.

In recent years, in Japan and elsewhere, digital satellite broadcast has started and it has become possible to provide programs on as many as 100 channels or more. As the number of channels increases in this manner, it becomes more inconvenient for a user (viewer) to select a desired program properly from a number of programs. In view of this, data relating to broadcast programs is transmitted separately from information of primary programs in the form of EPG (electronic program guide) data.

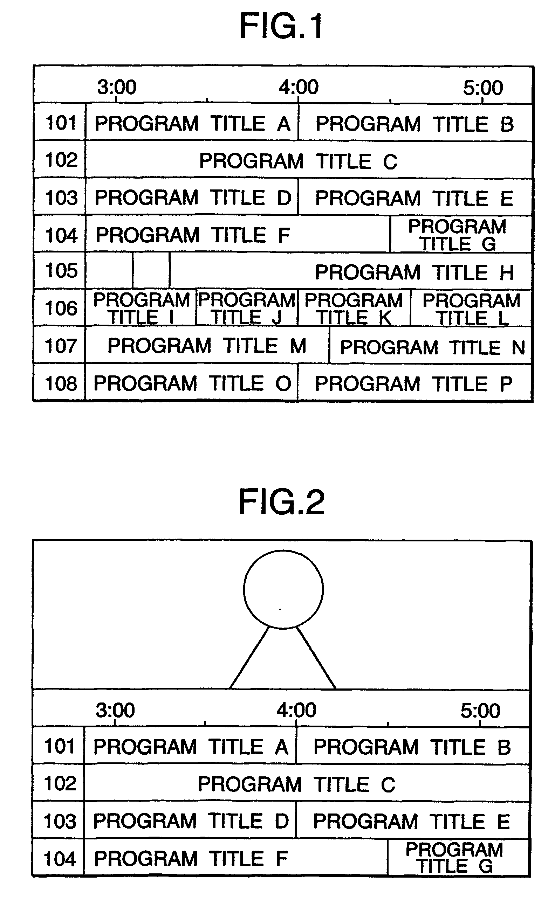

EPG data includes program titles etc. of each channel corresponding to broadcast hours. For example, based on the EPG data, an EPG as shown in Fig. 1, that is, what is called a program table, is displayed on the entire screen of a monitor (not shown). A user can find a desired program by referring to the EPG that is displayed on the monitor. In the case of the EPG of Fig. 1, the titles of programs that will be broadcast from 3 hours to 5 hours (2-hour period) on channel 101 to channel 108 (8 channels) are displayed.

Incidentally, an EPG may be displayed on the entire screen of a monitor as shown in Fig. 1 or in the bottom half of a picture of a program being broadcast as shown in Fig. 2. If the EPG of Fig. 1, for example, is displayed, a user cannot see a picture of a program while referring to the EPG. Even if an attempt to record the program is being made, actually the EPG being displayed on the monitor is recorded as it is. Eventually, the user cannot watch a picture he has missed.

If the EPG of Fig. 2, for example, is displayed, although a user can watch a top-half picture of a program, he cannot enjoy the program because the bottom half of the picture is cut out. Further, since EPG data is transmitted, for example, for channels corresponding to each transponder, a picture may be disconnected because of reasons on the transmission side when switching is made from an EPG currently referred to to an EPG of channels corresponding to another transponder. Therefore, the user may miss a picture of a program.

The present invention has been made in view of the above circumstances, and an object of the invention is therefore to display an EPG on a monitor without causing a user to have any difficulty watching a program as well as to prevent recording of the EPG.

According to a first aspect of the invention, there is provided an information processing apparatus comprising receiving means for receiving an EPG including prescribed text information, control information for controlling the prescribed text information, and a program table indicating a broadcast schedule of programs; extracting means for extracting the prescribed text information, the control information, and the program table from the EPG received by the receiving means; display control means for controlling display so as to display the prescribed text information together with the program table in accordance with the control information that has been extracted by the extracting means; reducing means for reducing a picture of a program in accordance with a picture that is controlled by the display control means; and combining means for combining the picture controlled by the display control means with a picture reduced by the reducing means.

There is provided an information processing method comprising a receiving step of receiving an EPG including prescribed text information, control information for controlling the prescribed text information, and a program table indicating a broadcast schedule of programs; an extracting step of extracting the prescribed text information, the control information, and the program table from the EPG received by the receiving step; a display control step of controlling display so as to display the prescribed text information together with the program table in accordance with the control information that has been extracted by the extracting step; a reducing step of reducing a picture of a program in accordance with a picture that is controlled by the display control step; and a combining step of combining the picture controlled by the display control step with a picture reduced by the reducing step.

There is provided a providing medium for providing a computer-readable program for execution of a process comprising a receiving step of receiving an EPG including prescribed text information, control information for controlling the prescribed text information, and a program table indicating a broadcast schedule of programs; an extracting step of extracting the prescribed text information, the control information, and the program table from the EPG received by the receiving step; a display control step of controlling display so as to display the prescribed text information together with the program table in accordance with the control information that has been extracted by the extracting step; a reducing step of reducing a picture of a program in accordance with a picture that is controlled by the display control step; and a combining step of combining the picture controlled by the display control step with a picture reduced by the reducing step.

According to a second aspect of the invention, there is provided a digital signal demodulation apparatus comprising receiving means for receiving an EPG signal including a program table indicating a broadcast schedule of programs and explanatory information that explains contents of the programs by text, and a picture signal of a program; reducing means for reducing the picture of the program when an instruction to display the program table has been made; and display control means for displaying one of the program table and the explanatory information so that it is located above or below the reduced picture of the program, and for displaying the other of the program table and the explanatory information so that it is located on the right or left of the reduced picture of the program.

There is provided a digital signal demodulation method comprising a receiving step of receiving an EPG signal including a program table indicating a broadcast schedule of programs and explanatory information that explains contents of the programs by text, and a picture signal of a program; a reducing step of reducing the picture of the program when an instruction to display the program table has been made; and a display control step of displaying one of the program table and the explanatory information so that it is located above or below the reduced picture of the program, and for displaying the other of the program table and the explanatory information so that it is located on the right or left of the reduced picture of the program.

There is provided a providing medium for providing a program for causing an information processing apparatus to execute a process comprising a receiving step of receiving an EPG signal including a program table indicating a broadcast schedule of programs and explanatory information that explains contents of the programs by text, and a picture signal of a program; a reducing step of reducing the picture of the program when an instruction to display the program table has been made; and a display control step of displaying one of the program table and the explanatory information so that it is located above or below the reduced picture of the program, and for displaying the other of the program table and the explanatory information so that it is located on the right or left of the reduced picture of the program.

According to a third aspect of the invention, there is provided a digital signal demodulation apparatus comprising receiving means for receiving, on a predetermined channel, an EPG including a program table for only the predetermined channel that indicates a broadcast schedule of programs of the predetermined channel, and for receiving a picture signal of a program of each channel; storing means for storing the EPG of each channel that has been received by the receiving means; reducing means for reducing the picture of the program when an instruction to display the program table has been made; and display control means for displaying the program table stored in the storing means so that it is combined with a picture that has been reduced by the reducing means when the instruction to display the program table has been made.

There is provided a digital signal demodulation method comprising a receiving step of receiving, on a predetermined channel, an EPG including a program table for only the predetermined channel that indicates a broadcast schedule of programs of the predetermined channel, and for receiving a picture signal of a program of each channel; a storing step of storing the EPG of each channel that has been received by the receiving step; a reducing step of reducing the picture of the program when an instruction to display the program table has been made; and a display control step of displaying the program table stored by the storing step so that it is combined with a picture that has been reduced by the reducing step when the instruction to display the program table has been made.

There is provided a providing medium for providing a program for causing an information processing apparatus to execute a process comprising a receiving step of receiving, on a predetermined channel, an EPG including a program table for only the predetermined channel that indicates a broadcast schedule of programs of the predetermined channel, and for receiving a picture signal of a program of each channel; a storing step of storing the EPG of each channel that has been received by the receiving step; a reducing step of reducing the picture of the program when an instruction to display the program table has been made; and a display control step of displaying the program table stored by the storing step so that it is combined with a picture that has been reduced by the reducing step when the instruction to display the program table has been made.

In the information processing apparatus, the information processing method, and the providing medium according to the first aspect of the invention, an EPG including prescribed text information, control information for controlling the prescribed text information, and a program table indicating a broadcast schedule of programs is received on a predetermined channel, the prescribed text information, the control information, and the program table are extracted from the received EPG, display is so controlled that the prescribed text information is displayed together with the program table in accordance with the extracted control information, a picture of a program is reduced in accordance with a controlled display picture, and the controlled picture is combined with the reduced picture.

In the digital signal demodulation apparatus, the digital signal demodulation method, and the providing medium according to the second aspect of the invention, an EPG signal including a program table indicating a broadcast schedule of programs and explanatory information that explains contents of the programs by text, and a picture signal of a program are received, the picture of the program is reduced when an instruction to display the program table has been made, and one of the program table and the explanatory information is displayed so as to be located above or below the reduced picture of the program, and the other of the program table and the explanatory information is displayed so as to be located on the right or left of the reduced picture of the program.

In the digital signal demodulation apparatus, the digital signal demodulation method, and the providing medium according to the third aspect of the invention, an EPG including a program table for only a predetermined channel that indicates a broadcast schedule of programs of the predetermined channel is received on the predetermined channel and a picture signal of a program of each channel is received, the received EPG of each channel is stored, the picture of the program is reduced when an instruction to display the program table has been made, and the stored program table is displayed so as to be combined with the reduced picture when the instruction to display the program table has been made.

Embodiments of the invention will now be described, by way of example only, with reference to the accompanying drawings, in which:
Fig. 1 illustrates a conventional display example on a monitor;
Fig. 2 illustrates another conventional display example on a monitor;
Fig. 3 is a block diagram showing an example configuration of a transmitting apparatus 1 that constitutes a transmission/reception system to which an information processing apparatus according to the present invention is applied;
Fig. 4 is a block diagram showing an example configuration of a receiving apparatus 31 to which the information processing apparatus of the invention is applied;
Fig. 5 is a block diagram showing an example configuration of a display converter 47 shown in Fig. 4;
Fig. 6 illustrates a display example on a monitor 62 shown in Fig. 4;
Figs. 7A-7C illustrate other display examples on the monitor 62 shown in Fig. 4;
Figs. 8A and 8B illustrate other display examples on the monitor 62 shown in Fig. 4;
Figs. 9A and 9B illustrate other display examples on the monitor 62 shown in Fig. 4;
Fig. 10 is a flowchart showing an EPG storing process;
Fig. 11 is a flowchart showing an EPG display process;
Fig. 12 illustrates another display example on the monitor 62 shown in Fig. 4;
Fig. 13 illustrates another display example on the monitor shown in Fig. 4;
Fig. 14 illustrates another display example on the monitor shown in Fig. 4;
Fig. 15 illustrates still another display example on the monitor shown in Fig. 4;
Figs. 16A-16D illustrate other display examples on the monitor shown in Fig. 4;
Fig. 17 is a flowchart showing an EPG scroll display process; and
Figs. 18A and 18B illustrate how scrolling is performed.

Before describing below an embodiment of the present invention, to clarify a corresponding relationship between each means of the invention described in the claims and components of the following embodiment, the features of the invention will be described below in such a manner that each means is followed, in parentheses, by a corresponding component (just an example) of the embodiment. However, naturally, the following statement does not mean that each means is limited to the component following it.

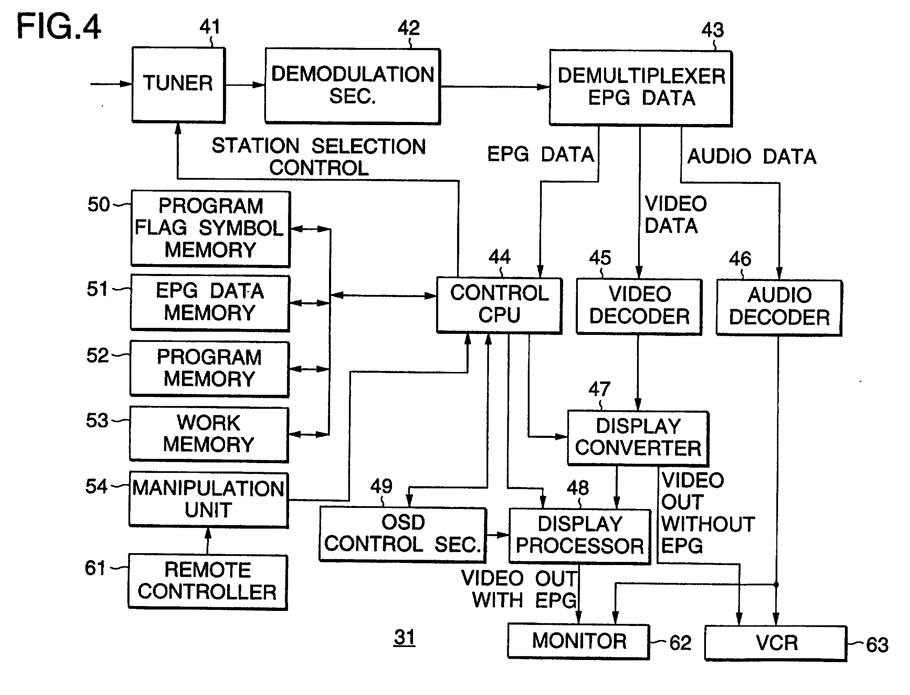

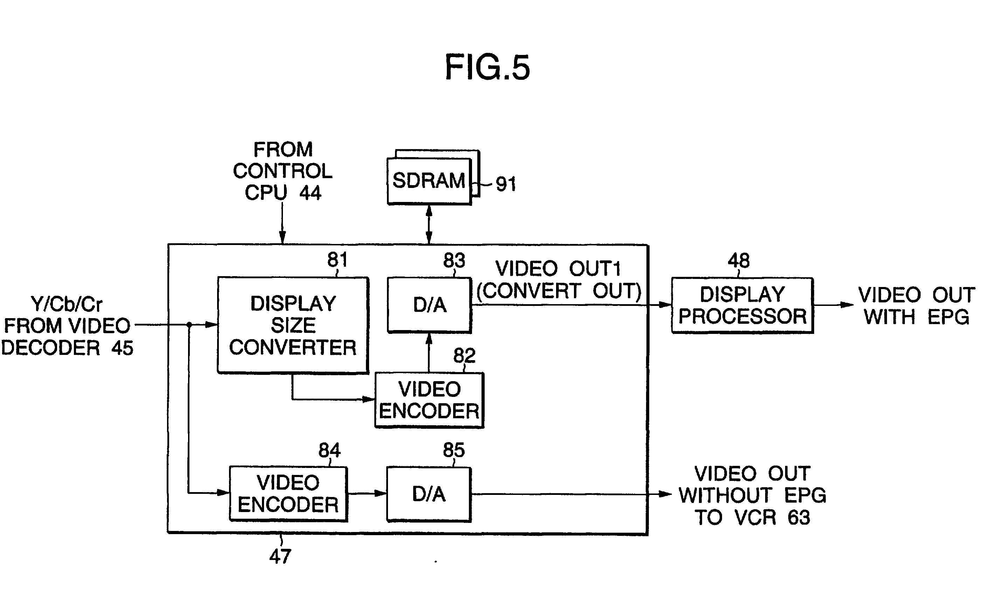

An information processing apparatus according to a first aspect of the invention comprises receiving means (e.g., a tuner 41 shown in Fig. 4) for receiving an EPG including prescribed text information, control information for controlling the prescribed text information, and a program table indicating a broadcast schedule of programs; extracting means (e.g., a control CPU 44 shown in Fig. 4) for extracting the prescribed text information, the control information, and the program table from the EPG received by the receiving means; display control means (e.g., the control CPU 44 and an OSD control section 49 shown in Fig. 4) for controlling display so as to display the prescribed text information together with the program table in accordance with the control information that has been extracted by the extracting means; reducing means (e.g., a display size converter 81 shown in Fig. 5) for reducing a picture of a program in accordance with a picture that is controlled by the display control means; and combining means (e.g., a display processor 48 shown in Fig. 4) for combining the picture controlled by the display control means with a picture reduced by the reducing means.

A digital signal demodulation apparatus recited according to a second aspect of the invention comprises receiving means (e.g., the tuner 41 shown in Fig. 4) for receiving an EPG signal including a program table indicating a broadcast schedule of programs and explanatory information that explains contents of the programs by text, and a picture signal of a program; reducing means (e.g., the display size converter 81 shown in Fig. 5) for reducing the picture of the program when an instruction to display the program table has been made; and display control means (e.g., the control CPU 44 and the OSD control section 49 shown in Fig. 4) for displaying one of the program table and the explanatory information so that it is located above or below the reduced picture of the program, and for displaying the other of the program table and the explanatory information so that it is located on the right or left of the reduced picture of the program.

A digital signal demodulation apparatus according to a third aspect of the invention comprises receiving means (e.g., the tuner 41 shown in Fig. 4) for receiving, on a predetermined channel, an EPG including a program table for only the predetermined channel that indicates a broadcast schedule of programs of the predetermined channel, and for receiving a picture signal of a program of each channel; storing means (e.g., an EPG data memory 51 shown in Fig. 4) for storing the EPG of each channel that has been received by the receiving means; reducing means (e.g., the display size converter 81 shown in Fig. 5) for reducing the picture of the program when an instruction to display the program table has been made; and display control means (e.g., the display processor 48 shown in Fig. 4) for displaying the program table stored in the storing means so that it is combined with a picture that has been reduced by the reducing means when the instruction to display the program table has been made.

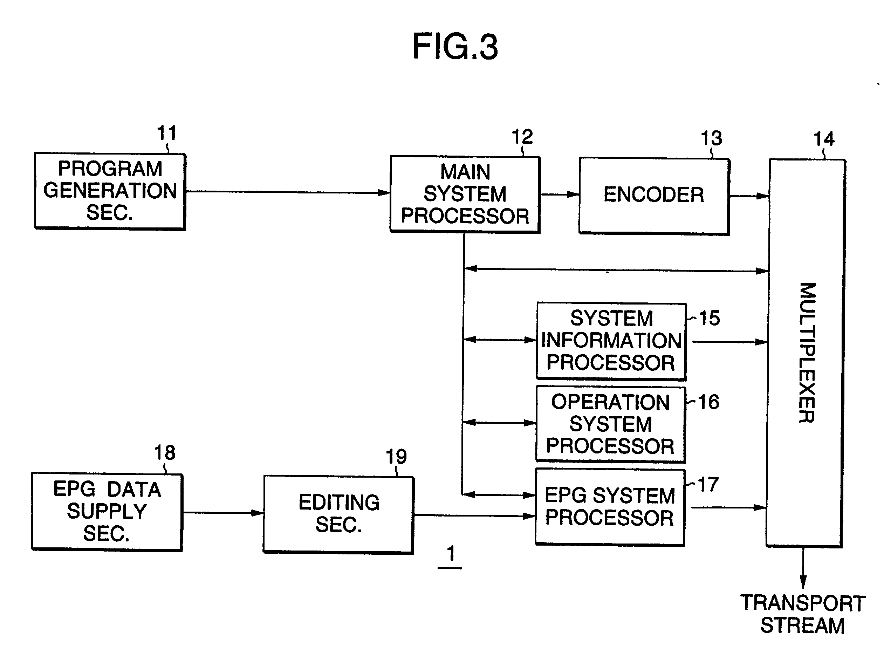

Fig. 3 shows an example configuration of a transmitting apparatus 1 that constitutes a transmission/reception system to which an information processing apparatus according to the invention is applied. In the transmitting apparatus 1, a program generation section 11 generates data (audio data and video data) of a program to be broadcast. A main system processor 12 supplies an encoder 13 with program data that is supplied from the program generation section 11 and makes the encoder 13 encode the program data. Further, the main system processor 12 generates a reference clock signal, time information, etc. and supplies those to a system information processor 15, an operation system processor 16, an EPG system processor 17, a multiplexer 14, etc. The encoder 13 encodes the program data that is supplied from the program generation section 11 via the main system processor 12 according to, for example, the MPEG scheme and outputs encoded data to the multiplexer 14.

The system information processor 15 generates system information that is necessary for decoding of a transmission signal and outputs it to the multiplexer 14. The operation system processor 16 processes an instruction corresponding to an input from a keyboard, a mouse (both not shown), or the like and outputs a processing result to the main system processor 12 when necessary.

An EPG data supply section 18 generates EPG data and outputs it to an editing section 19. Where an individual program has a feature and it is desired to display an EPG of the program with feature recognition information added to it, the editing section 19 generates a program flag indicating that situation and inserts it in the EPG data. The editing section 19 adds program text information (e.g., information such as performers and an outline of the program) and channel text information (e.g., program advertisement information such as a broadcast schedule of special programs) to the EPG data. The program text information and the channel text information will be displayed in scrolled manner. When a scroll speed of such a display is specified, the editing section 19 adds its information (scroll speed information) to the EPG data.

The EPG system processor 17 processes the EPG data that is supplied from the editing section 19, in synchronism with a signal that is supplied from the main system processor 12, and outputs processed data to the multiplexer 14. The multiplexer 14 combines the program data (audio data and video data) that is supplied from the encoder 13 and the EPG data that is supplied from the EPG system processor 17 into a transport stream, and transmits it to a satellite (not shown).

Fig. 4 shows an example configuration of a receiving apparatus 31 for receiving data that is transmitted from the transmitting apparatus 1 of Fig. 3 via a satellite. The receiving apparatus 31 receives, with a tuner 41, radio waves that are transmitted from the satellite and outputs a reception signal to a demodulation section 42. The demodulation section 42 demodulates the signal supplied from the tuner 41 and outputs a demodulation signal to a demultiplexer 43. The demultiplexer 43 extracts not only audio data and video data that constitute program data but also EPG data from the data that is input from the demodulation section 42. The demultiplexer 43 supplies the audio data to an audio decoder 46, the video data to a video decoder 45, and the EPG data to a control CPU 44.

The audio decoder 46 decodes the input audio data and outputs decoded data to, for example, a VCR (video cassette recorder) 63 and a monitor 62 that are connected to the receiving apparatus 31. The video decoder 45 decodes the input video data and outputs decoded data to a display converter 47. The display converter 47 reduces the size of a picture that is based on the video data supplied from the video decoder 45 to a prescribed size in accordance with a control of the control CPU 44, and outputs resulting data to a display processor 48. The display converter 47 also outputs a video data signal that has not been subjected to picture size reduction to the VCR 63.

Controlled by the control CPU 44, an OSD control section 49 generates OSD (on-screen display) data to be superimposed on video data and outputs it to the display processor 48. Controlled by the control CPU 44, the display processor 48 combines the OSD data that is supplied from the OSD control section 49 with the video data that is supplied from the display converter 47, and outputs resulting data to the monitor 62.

A program flag symbol memory 50 stores, in accordance with a program flag, data of symbols (feature recognition information) to be superimposed on an EPG. An EPG data memory 51 stores the EPG data that has been supplied from the demultiplexer 43 to the control CPU 44. A program memory 52 stores programs that are necessary for the control CPU 44 to execute various processes. A work memory 53 stores, when necessary, data, programs, etc. that are necessary for the control CPU 44 to execute various processes. A manipulation unit 54 captures an infrared signal that is input from a remote controller 61 and an input from buttons, switches, and the like (not shown) that are provided on the main body of the receiving apparatus 31, and outputs a resulting detection signal to the control CPU 44.

Fig. 5 shows an example configuration of the display converter 47. A display size converter 81 reduces the size of one picture that is formed by a luminance signal Y and color difference signals Cb (B - Y) and Cr (R - Y) that are supplied from the video decoder 45 to a prescribed size in accordance with an instruction that is supplied from the control CPU 44, and outputs resulting data to a video encoder 82. The video encoder 82 converts the video data that is input from the display size converter 81 to video data of, for example, the NTSC scheme and outputs it to a D/A converter 83. The D/A converter 83 D/A-converts the input video data and outputs resulting data to the display processor 48. The display processor 48 processes the input video data, combines it with symbols (figures) corresponding to the EPG that is supplied from the OSD control section 49 as described above, and outputs resulting data to the monitor 62.

The video data that is input from the video decoder 45 is converted to video data of the NTSC scheme by a video encoder 84, converted to an analog signal by a D/A converter 85, and then supplied to the VCR 63.

An SDRAM 91 is also connected to the display converter 47. The SDRAM 91 is a memory for temporarily storing picture data when the display size converter 81 changes the display size.

Next, the operations of the above apparatuses will be described. Program data that has been generated by the program generation section 11 is supplied to the encoder 13 via the main system processor 12 and encoded there.

On the other hand, the EPG data supply section 18 generates, for each transponder of a satellite, EPG data of corresponding channels, for example, broadcast-scheduled programs of two weeks, and outputs the generated EPG data to the editing section 19. The editing section 19 executes an editing process on the EPG data. Where a scroll speed of program text information or channel text information is specified, the editing section 19 adds not only the text information but also scroll speed information to the EPG data.

The EPG system processor 17 processes the EPG data that is supplied from the editing section 19 so that it will comply with a predetermined format and outputs processed data to the multiplexer 14.

The multiplexer 14 packetizes each of the program data that is supplied from the encoder 13 and the EPG data that is supplied from the EPG system processor 17, combines packetized data into a transport stream, and transmits it to a satellite.

In the receiving apparatus 31, the control CPU 44 controls the tuner 41 in accordance with an instruction from the remote controller 61 or the manipulation unit 54, to have it receive a signal coming from a prescribed transponder of the satellite. The demodulation section 42 demodulates a signal that is output from the tuner 41 and outputs a demodulation signal to the demultiplexer 43. The demultiplexer 43 extracts audio data, video data, and EPG data from the data that is supplied from the demodulation section 42, and outputs those data to the audio decoder 46, the video decoder 45, and the control CPU 44, respectively.

The EPG data that is supplied from the demultiplexer 43 is stored in the EPG data memory 51 by the control CPU 44.

The audio data that has been input to the audio decoder 46 is decoded on an audio packet basis and output to the VCR 63 and the monitor 62. The video data that has been input to the video decoder 45 is decoded on a video packet basis and output to the display converter 47.

The video data that has been decoded by the video decoder 45 is supplied to the display size converter 81 and the video encoder 84 of the display converter 47.

The video data that has been input to the display size converter 81 of the display converter 47 is stored in the SDRAM 91 and its size is changed to a display size corresponding to an instruction that is supplied from the control CPU 44. Video data whose size has been converted to the prescribed size is converted to video data of the NTSC scheme by the video encoder 82, D/A-converted by the D/A converter 83, and then input to the display processor 48.

For example, when receiving a prescribed instruction from the remote controller 61 or the manipulation unit 54, the control CPU 44 reads out the EPG data that is stored in the EPG data memory 51 and outputs read-out data to the OSD control section 49. The OSD control section 49 converts the input EPG data to picture data and outputs it to the display processor 48. The display processor 48 outputs the picture data that is supplied from the OSD control section 49 to the monitor 62 singly or after superimposing it on the video picture data that is supplied from the display converter 47.

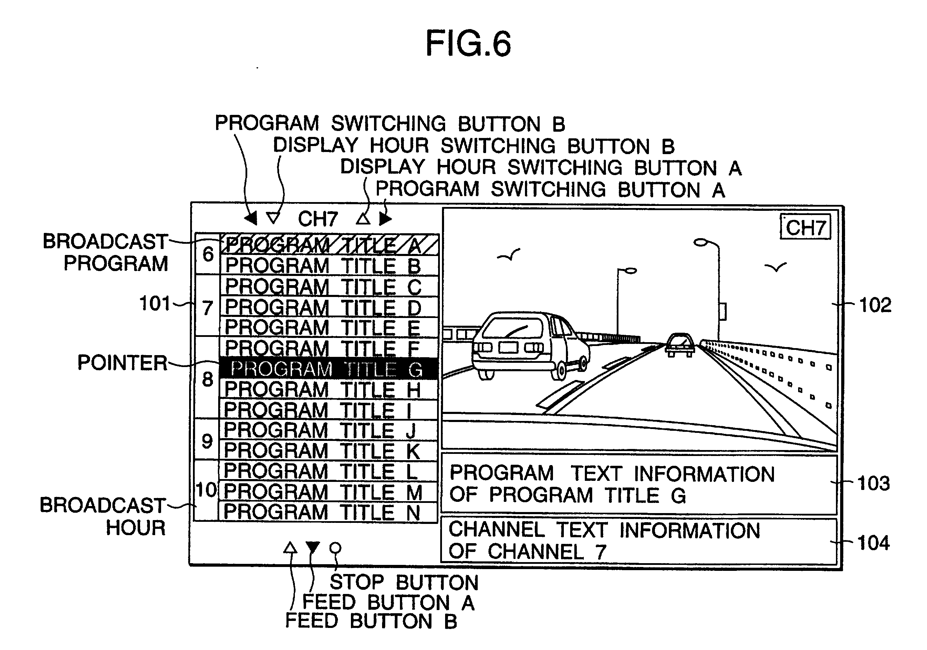

As a result, for example, a picture shown in Fig. 6 is displayed on the monitor 62. In this example, an EPG 101 that is long in the vertical direction is displayed on the left side and a reduced picture 102 is displayed in a top-right area. The picture 102 is a picture of a program that has been reduced in such a manner that the aspect ratio (e.g., 9:16) of the program picture is maintained, and hence the entire program picture is displayed.

Program text information of a program in the EPG 101 indicated by a pointer (indicated in black in Fig. 6) is displayed in a display area 103 that is under the program picture 102. Further, channel text information of the selected channel is displayed in a display area 104 under the display area 103.

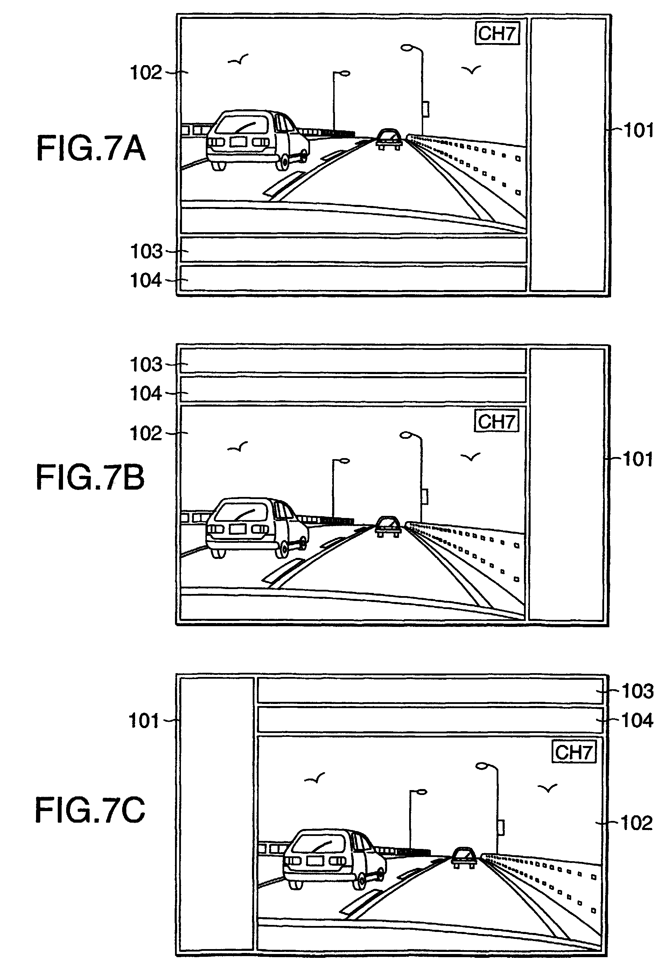

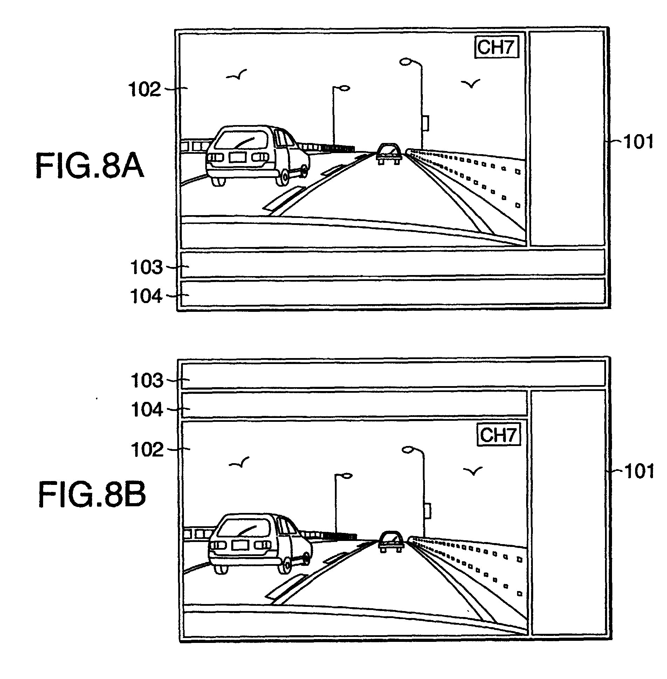

An EPG may be displayed in display formed other than the display form shown in Fig. 6, such as display forms shown in Figs. 7A-7C and 8A-8B. A display form is specified in advance for each EPG.

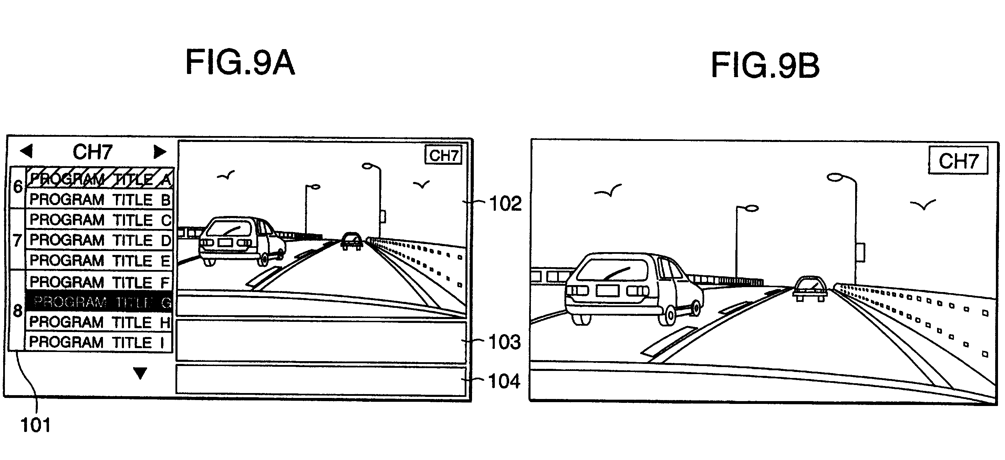

On the other hand, the video data that has been input to the video encoder 84 of the display converter 47 is encoded into video data of the NTSC scheme without being subjected to display size changing, and output to the D/A converter 85. The D/A converter 85 D/A-converts the input video data and outputs a resulting signal directly to the VCR 63. When EPG picture data and video data have been combined together and picture data corresponding to, for example, a picture shown in Fig. 9A is output to the monitor 62, picture data corresponding to a picture shown in Fig. 9B (i.e., only a program picture not including the EPG) is output to the VCR 63.

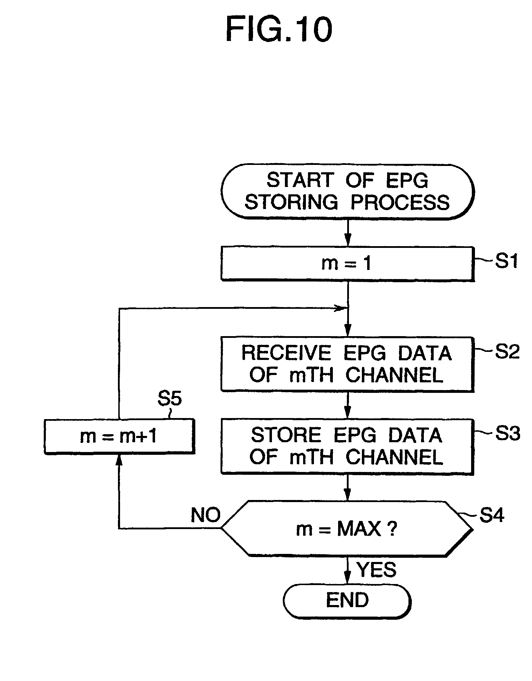

Next, a process that is executed by the control CPU 44 in storing EPG data corresponding to n transponders of a satellite (not shown) in the EPG data memory 51 will be described with reference to a flowchart of Fig. 10. First, at step S1, the control CPU 44 sets variable m that is managed by itself at 1. At step S2, the control CPU 44 acquires EPG data of the first channel from the demultiplexer 43. At step S3, the control CPU 44 stores the EPG data that has been acquired at step S2 in the EPG data memory 51.

Then, at step S4, it is judged whether EPG data corresponding to the maximum number (n) of channels that can be stored by the EPG data memory 51 have been stored there. If EPG data of n channels have not been stored yet, the process goes to step S5, where "1" is added to variable m. The process then returns to step S2 to execute step S2 and the following steps repeatedly until EPG data of n channel have been stored, that is, m becomes equal to n.

If it is judged at step S4 that EPG data of n channels have been stored, the EPG data storing process is finished.

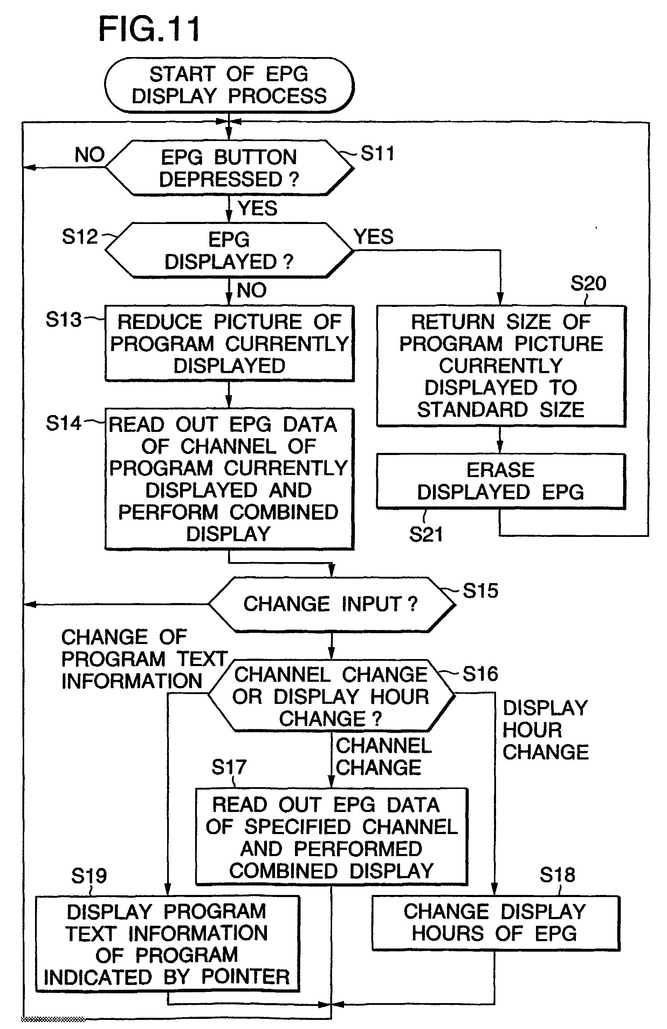

Next, a process that is executed by the control CPU 44 in displaying an EPG as shown in Fig. 6 on the monitor 62 will be described with reference to a flowchart of Fig. 11 (alternatively, it is possible to have the OSD control section 49 execute this process). First, at step S11, the control CPU 44 waits for input, via the manipulation unit 54, of an EPG display instruction signal that is to be output from the remote controller 61 when an EPG button (not shown) on the remote controller 61 is depressed. When an EPG display instruction signal has been input, the process goes to step S12, where it is judged whether an EPG is already displayed on the monitor 62.

If it is judged at step S12 that no EPG is displayed on the monitor 62, the process goes to step S13, where the control CPU 44 controls the display size converter 81 of the display converter 47 to have it reduce the picture of a program currently displayed on the monitor 62 in such a manner that its aspect ratio (9:16) is maintained and output a resulting picture to the display processor 48.

Then, at step S14, the control CPU 44 reads out EPG data of the channel of the program currently displayed from the EPG data memory 51, and controls the OSD control section 49 and the display processor 48 to have them combine the EPG data with the picture of the program that has been reduced at step S13 and display a combined picture on the monitor 62.

Then, at step S15, it is judged whether a request for changing the channel that corresponds to an EPG program table, the display hours, or the program whose program text information is to be displayed has been made. If no request for such a change has been made, the process returns to step S11 to execute step S11 and the following steps repeatedly until a request for a change is made.

If it is judged at step S15 that a request for changing the channel that corresponds to an EPG program table, the display hours, or the program whose program text information is to be displayed has been made, the process goes to step S16, where it is judged whether the change request is a request for changing the channel, the display hours, or the program whose program text information is to be displayed. If a channel change has been requested, the process goes to step S17, where the control CPU 44 reads out EPG data of the channel corresponding to the request from the EPG data memory 51, and controls the OSD control section 49 and the display processor 48 to have them combine the EPG data with the picture of the program and display a combined picture on the monitor 62.

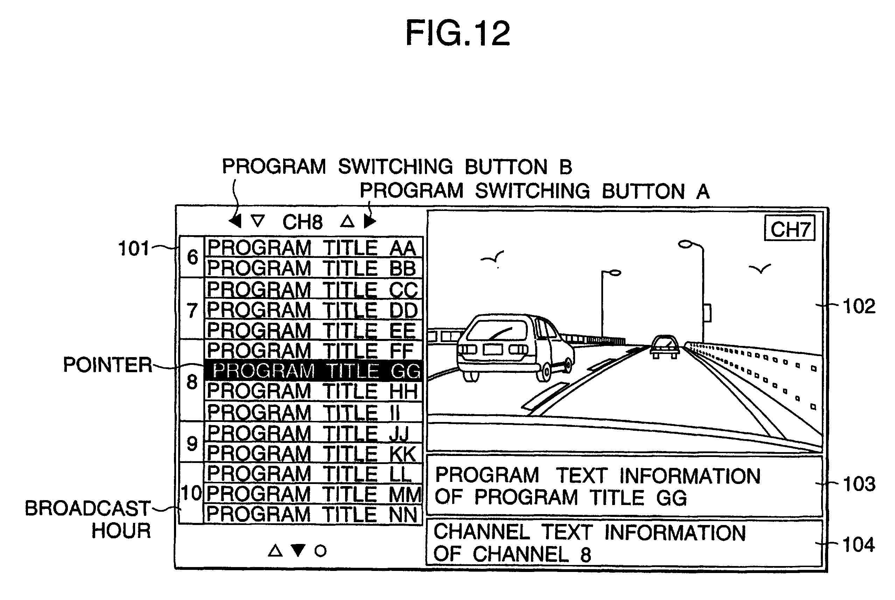

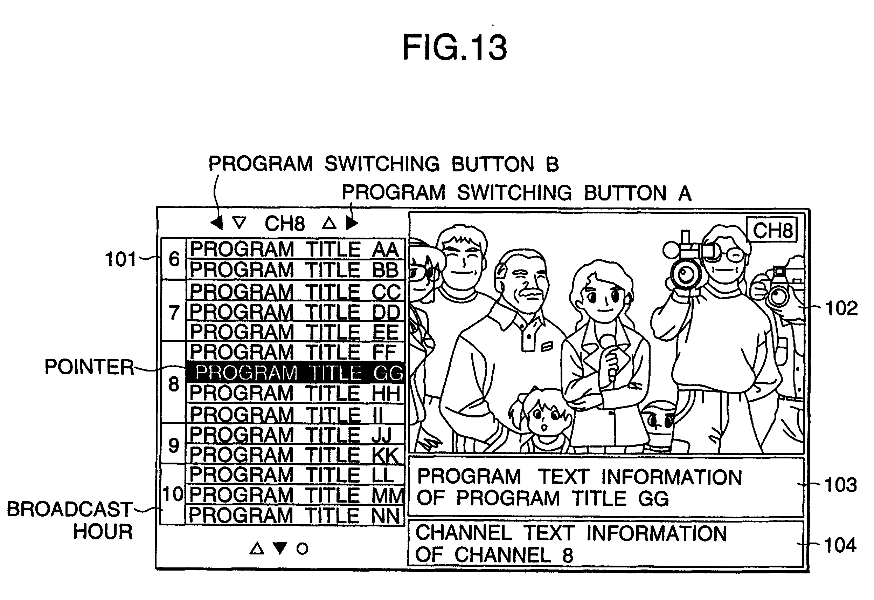

Figs. 12 and 13 show EPGs in which the channel has been changed in accordance with a manipulation on the remote controller 61.

If, for example, the program switching button A (top-left position) is depressed in a state that the picture of Fig. 6 is displayed on the monitor 62, a program table of channel 8 is displayed as an EPG 101 in place of the program table of channel 7 as shown in Fig. 12. Channel text information of channel 8 is displayed in the display area 104. At this time, the pointer is automatically moved to a program title GG in the EPG 101 and program text information of the program title GG is displayed in the display area 103.

If the program switching button B (top-left position) is depressed in a state that the picture of Fig. 12 is displayed on the monitor 62, the picture of Fig. 6 is displayed again.

It is possible to select the channel of the switched EPG 101 and display a picture of the program (program title GG) of the selected channel (channel 8) on the screen 102, as shown in Fig. 13.

Returning to the flowchart of Fig. 11, if it is judged at step S16 that a display hour change has been requested, the process goes to step S18, where the control CPU 44 reads out EPG data of display hours corresponding to the request from the EPG data memory 51 and controls the OSD control section 49 and the display processor 48 to have them combine the EPG data with the program picture and display a combined picture on the monitor 62.

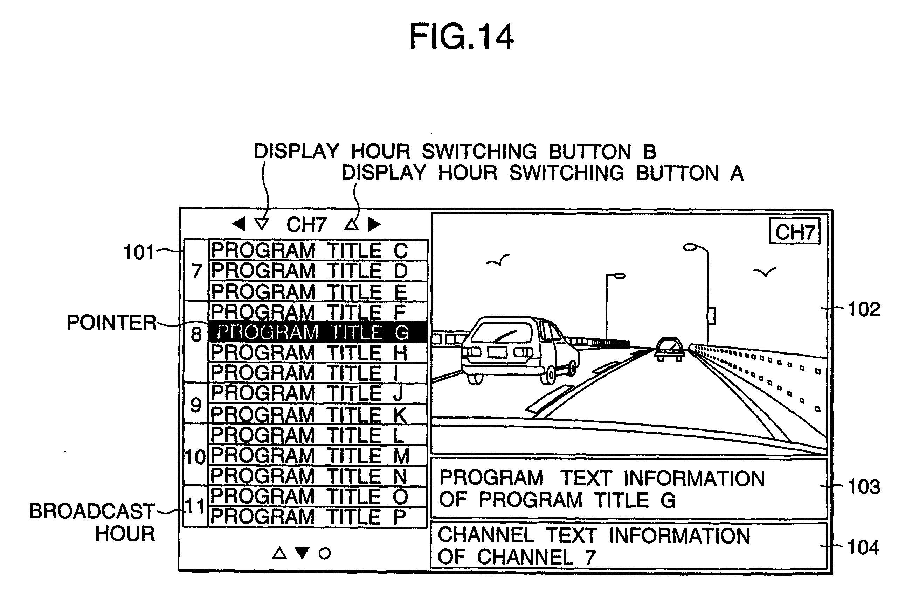

Fig. 14 shows an EPG in which the display hours that correspond to the program table of the EPG have been changed in accordance with a manipulation on the remote controller 61. If, for example, the display hour switching button A (top-left position) in the EPG 101 is depressed in a state that the picture of Fig. 6 is displayed on the monitor 62, a program table from 7 hours to 11 hours is displayed in the EPG 101 in place of the program table from 6 hours to 10 hours, as shown in Fig. 14.

If the display hour switching button B (top-left position) is depressed in a state that the picture of Fig. 14 is displayed on the monitor 62, the picture of Fig. 6 is displayed again.

Returning to the flowchart of Fig. 11, if it is judged at step S16 that a change of the program whose program text information is to be displayed in the display area 103 has been requested, the process goes to step S19, where the control CPU 44 reads out EPG data of program text information of the program corresponding to the request and controls the OSD control section 49 and the display processor 48 to have them combine the EPG data with the program picture and display a combined picture on the monitor 62.

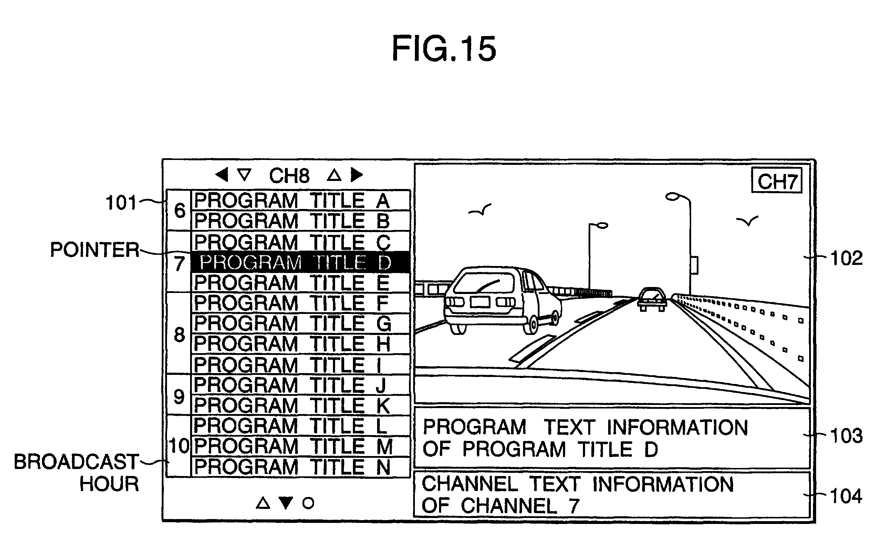

Fig. 15 shows an EPG in which the program whose program text information is to be displayed in the display section 103 has been changed in accordance with a manipulation on the remote controller 61. As shown in Fig. 15, if the pointer has been moved to a program title D in the EPG 101 in a state that the picture of Fig. 6 is displayed on the monitor 62, the program text information of the program title D is displayed in the display area 103.

The change corresponding to the request has been effected at step S17, S18, or S19, the process returns to step S11 to execute step S11 and the following steps repeatedly.

If it is judged at step S12 that an EPG is already displayed on the monitor 62, the process goes to step S20, where the size of the picture of a program that is displayed at this time point is returned to the standard size. At step S21, the displayed EPG is erased. When the EPG has been erased from the monitor 62, the process returns to step S11 to execute step S11 and the following steps again.

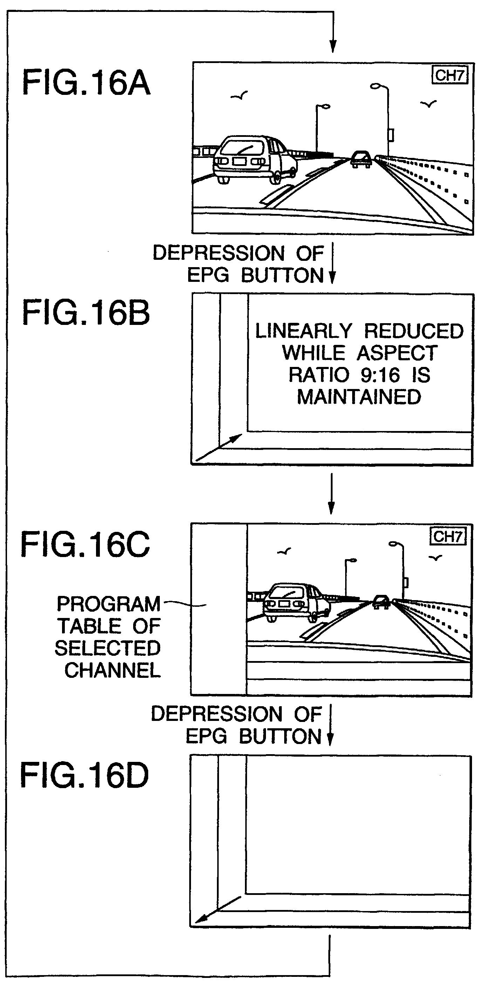

Figs. 16A-16D show pictures to be displayed on the monitor 62 as the above EPG display process is executed. If the EPG button is depressed (step S11) in a state that a picture of Fig. 16A is displayed on the monitor 62, a program picture is reduced in such a manner that its aspect ratio is maintained as shown in Fig. 16B (step S13). A reduced picture is combined with an EPG picture (step S14), and a picture as shown in Fig. 16C is displayed on the monitor 62. If the EPG button is depressed in a state that the EPG picture as shown in Fig. 16C is displayed on the monitor 62 (step S12), the size of the program picture that is currently displayed is returned to the standard size (step S20) as shown in Fig. 16D and the displayed EPG is erased (step S21).

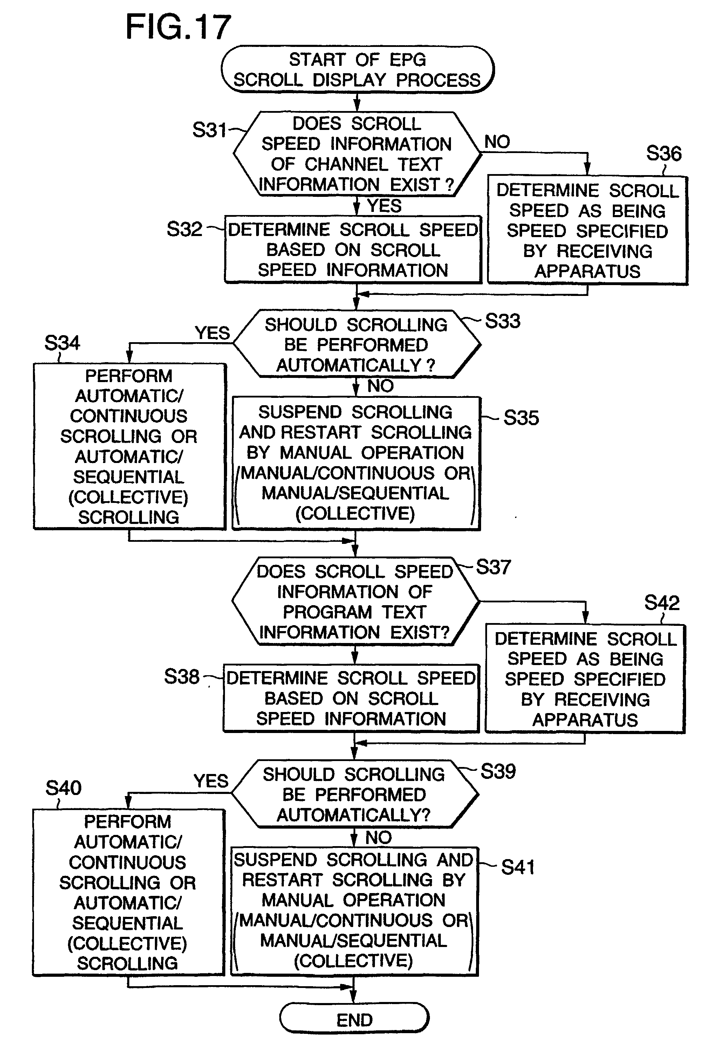

Next, a process that is executed by the control CPU 44 when program text information is displayed in the display area 103 in a scrolled manner or channel text information is displayed in the display area 104 in a scrolled manner (see Fig. 6) will be described with reference to a flowchart of Fig. 17. First, at step S31, it is judged whether the scroll speed information of the channel text information of the channel currently selected (in this case, channel 7) exists in the EPG data. If scroll speed information exists, the process goes to step S32, where the scroll speed is determined based on the scroll speed information.

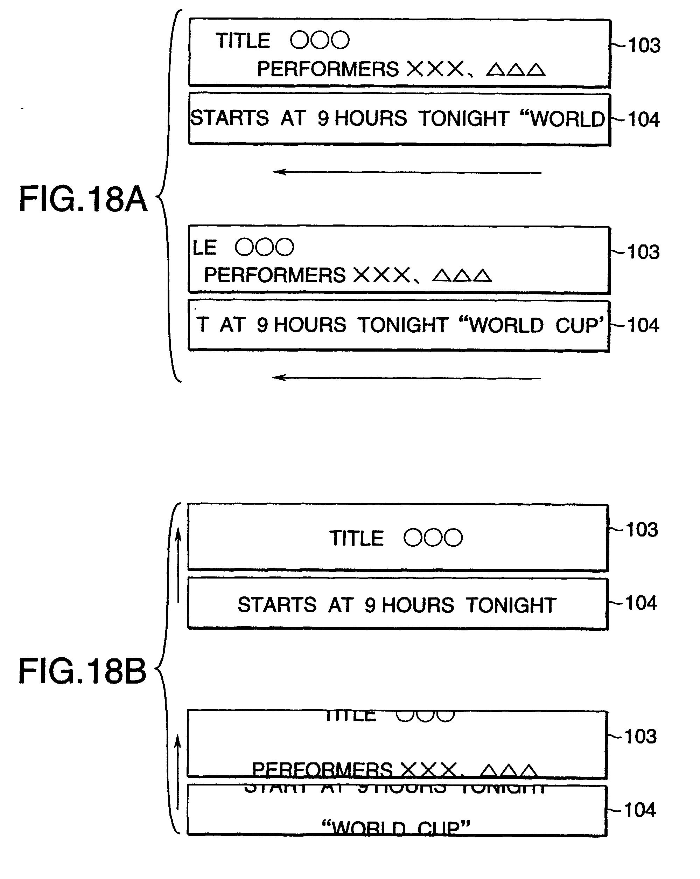

Then, at step S33, it is judged whether scrolling should be performed automatically at the speed determined at step S32. If scrolling should be performed automatically, the process goes to step S34, where the channel text information is displayed in the display area 104 while being scrolled automatically. Figs. 18A and 18B show how scrolling is performed in the display areas 103 and 104.

When the channel text information should not be scrolled automatically, for example, when a user has selected the display area 104 by manipulating the remote controller 61 and has depressed the stop button (bottom-left position) in the picture of Fig. 6, the scrolling is suspended and text information at this time point continues to be displayed in the display area 104. If the feed button A in the picture of Fig. 6 is manipulated in this state, the text information restarts to move forward. If the feed button B in the picture of Fig. 6 is manipulated, the text information restarts to be displayed backward. The text information is displayed in the display area 104 in a manual/continuous manner or a manual/sequential manner.

If it is judged at step S31 that scroll speed information of the channel text information of the selected channel (in this case, channel 7) does not exist in the EPG data, the process goes to step S36, where the scroll speed is determined as being a speed specified by the receiving apparatus. Then, the process goes to step S33 to execute steps S33-S35.

Then, at step S37, it is judged whether scroll speed information of the program text information of the program indicated by the pointer in the picture of Fig. 6 exists in the EPG data. The following steps S38-S42 are similar to steps S32-S36, respectively. That is, the program text information is displayed in the display area 103 while being scrolled automatically or manually.

In generating program text information or channel text information, broadcasters can attempt to give users a strong impression by causing unique characters (e.g., large or colored characters) or specifying a scroll speed (e.g., employing a slow scroll speed).

In the invention, the term "system" means the entire apparatus that is constituted of a plurality of apparatuses, means, etc.

In this specification, the providing medium that provides users with a computer program for execution of the above process includes not only recording media such as a magnetic disk and a CD-ROM but also communication media such as a network and a satellite.

In the information processing apparatus, the information processing method, and the providing medium according to the first aspect of the invention, an EPG including prescribed text information, control information for controlling the prescribed text information, and a program table indicating a broadcast schedule of programs is received on a predetermined channel, the prescribed --text information, the control information, and the program table are extracted from the received EPG, display is so controlled that the prescribed text information is displayed together with the program table in accordance with the extracted control information, a picture of a program is reduced in accordance with a controlled display picture, and the controlled picture is combined with the reduced picture. Therefore, a large quantity of information can be displayed in an EPG.

In the digital signal demodulation apparatus, the digital signal demodulation method, and the providing medium according to the second aspect of the invention, an EPG signal including a program table indicating a broadcast schedule of programs and explanatory information that explains contents of the programs by text, and a picture signal of a program are received, the picture of the program is reduced when an instruction to display the program table has been made, and one of the program table and the explanatory information is displayed so as to be located above or below the reduced picture of the program, and the other of the program table and the explanatory information is displayed so as to be located on the right or left of the reduced picture of the program. Therefore, a user can watch a picture of a program while referring to an EPG.

In the digital signal demodulation apparatus, the digital signal demodulation method, and the providing medium according to the third aspect of the invention, an EPG including a program table for only a predetermined channel that indicates a broadcast schedule of programs of the predetermined channel is received on the predetermined channel and a picture signal of a program of each channel is received, the received EPG of each channel is stored, the picture of the program is reduced when an instruction to display the program table has been made, and the stored program table is displayed so as to be combined with the reduced picture when the instruction to display the program table has been made. Therefore, a picture is not disconnected even in, for example, displaying an EPG of a channel corresponding to another transponder in place of an EPG currently referred to.

## Claims

1. An information processing apparatus comprising:
receiving means for receiving an EPG including prescribed text information, control information for controlling the prescribed text information, and a program table indicating a broadcast schedule of programs;
extracting means for extracting the prescribed text information, the control information, and the program table from the EPG received by the receiving means;
display control means for controlling a display so as to display the prescribed text information together with the program table in accordance with the control information that has been extracted by the extracting means;
reducing means for reducing a picture of a program in accordance with a picture that is controlled by the display control means; and
combining means for combining the picture controlled by the display control means with a picture reduced by the reducing means.

2. The information processing apparatus according to claim 1, further comprising output means for outputting a picture of the program that is not reduced by the reducing means.

3. The information processing apparatus according to claim 1 or 2, wherein the control information includes scroll speed information.

4. The information processing apparatus according to claim 1, 2 or 3, wherein the reducing means reduces the picture of the program in such a manner that its aspect ratio is maintained.

5. The information processing apparatus according to claim 1, 2, 3 or 4, wherein the reducing means reduces the picture of the to a channel on which the picture of the program is provided.

6. An information processing method comprising:
a receiving step of receiving an EPG including prescribed text information, control information for controlling the prescribed text information, and a program table indicating a broadcast schedule of programs;
an extracting step of extracting the prescribed text information, the control information, and the program table from the EPG received by the receiving step;
a display control step of controlling a display so as to display the prescribed text information together with the program table in accordance with the control information that has been extracted by the extracting step;
a reducing step of reducing a picture of a program in accordance with a picture that is controlled by the display control step; and
a combining step of combining the picture controlled by the display control step with a picture reduced by the reducing step.

7. A providing medium for providing a computer-readable program for execution of a process comprising:
a receiving step of receiving an EPG including prescribed text information, control information for controlling the prescribed text information, and a program table indicating a broadcast schedule of programs;
an extracting step of extracting the prescribed text information, the control information, and the program table from the EPG received by the receiving step;
a display control step of controlling a display so as to display the prescribed text information together with the program table in accordance with the control information that has been extracted by the extracting step;
a reducing step of reducing a picture of a program in accordance with a picture that is controlled by the display control step; and
a combining step of combining the picture controlled by the display control step with a picture reduced by the reducing step.

8. A digital signal demodulation apparatus comprising:
receiving means for receiving an EPG signal including a program table indicating a broadcast schedule of programs and explanatory information that explains contents of the programs by text, and for receiving a picture signal of a program;
reducing means for reducing the picture of the program when an instruction to display the program table has been made; and
display control means for displaying one of the program table and the explanatory information so that it is located above or below the reduced picture of the program, and for displaying the other of the program table and the explanatory information so that it is located on the right or left of the reduced picture of the program.

9. The digital signal demodulation apparatus according to claim 8, wherein the EPG signal further includes text information relating to a channel on which the picture of the program is provided, and wherein the display control means displays the text information relating to the channel in parallel with the explanatory information.

10. A digital signal demodulation method comprising:
a receiving step of receiving an EPG signal including a program table indicating a broadcast schedule of programs and explanatory information that explains contents of the programs by text, and receiving a picture signal of a program;
a reducing step of reducing the picture of the program when an instruction to display the program table has been made; and
a display control step of displaying one of the program table and the explanatory information so that it is located above or below the reduced picture of the program, and for displaying the other of the program table and the explanatory information so that it is located on the right or left of the reduced picture of the program.

11. A providing medium for providing a program for causing an information processing apparatus to execute a process comprising:
a receiving step of receiving an EPG signal including a program table indicating a broadcast schedule of programs and explanatory information that explains contents of the programs by text, and receiving a picture signal of a program;
a reducing step of reducing the picture of the program when an instruction to display the program table has been made; and
a display control step of displaying one of the program table and the explanatory information so that it is located above or below the reduced picture of the program, and for displaying the other of the program table and the explanatory information so that it is located on the right or left of the reduced picture of the program.

12. A digital signal demodulation apparatus comprising:
receiving means for receiving, on a predetermined channel, an EPG including a program table for only the predetermined channel that indicates a broadcast schedule of programs of the predetermined channel, and for receiving a picture signal of a program of each channel;
storing means for storing the EPG of each channel that has been received by the receiving means;
reducing means for reducing the picture of the program when an instruction to display the program table has been made; and
display control means for displaying the program table stored in the storing means so that it is combined with a picture that has been reduced by the reducing means when the instruction to display the program table has been made.

13. The digital signal demodulation apparatus according to claim 12, wherein the display control means displays the program table of only one channel, and wherein the receiving means switches, when an instruction to display a program table of another channel is made, a channel of a program to be received and displayed to the channel of the instructed program table.

14. A digital signal demodulation method comprising:
a receiving step of receiving, on a predetermined channel, an EPG including a program table for only the predetermined channel that indicates a broadcast schedule of programs of the predetermined channel, and for receiving a picture signal of a program of each channel;
a storing step of storing the EPG of each channel that has been received by the receiving step;
a reducing step of reducing the picture of the program when an instruction to display the program table has been made; and
a display control step of displaying the program table stored by the storing step so that it is combined with a picture that has been reduced by the reducing step when the instruction to display the program table has been made.

15. A providing medium for providing a program for causing an information processing apparatus to execute a process comprising:
a receiving step of receiving, on a predetermined channel, an EPG including a program table for only the predetermined channel that indicates a broadcast schedule of programs of the predetermined channel, and receiving a picture signal of a program of each channel;
a storing step of storing the EPG of each channel that has been received by the receiving step;
a reducing step of reducing the picture of the program when an instruction to display the program table has been made; and
a display control step of displaying the program table stored by the storing step so that it is combined with a picture that has been reduced by the reducing step when the instruction to display the program table has been made.
